# EUROPÄISCHE PATENTSCHRIFT

(11) **EP 3 220 444 B1**
(45) Veröffentlichungstag und Bekanntmachung des Hinweises auf die Patenterteilung: **22.04.2026**
(21) Anmeldenummer: 16160091.1
(22) Anmeldetag: 14.03.2016
(51) Int. Cl.: H01M 10/615, H01M 10/6556, H01M 10/643, H01M 10/6554, H01M 10/613, H01M 50/503, H01M 50/507, H01M 50/521

(54) **BATTERIE**
BATTERY
BATTERIE

(43) Veröffentlichungstag der Anmeldung: 20.09.2017
(73) Patentinhaber: Miba Battery Systems GmbH, 4190 Bad Leonfelden (AT)
(72) Erfinder: REINGRUBER, Martin, 4191 Vorderweißenbach (AT); JENNER-BRAUNSCHMIED, Edmund, 4180 Zwettl an der Rodl (AT)
(74) Vertreter: Ofner, Clemens

(56) Entgegenhaltungen:
- EP-A1- 2 475 025
- US-A1- 2009 297 892
- US-A1- 2011 293 998

## Beschreibung

### Technisches Gebiet

Die Erfindung betrifft eine Batterie mit mehreren, elektrisch zusammengeschalteten Batteriemodulen, die je mehrere zusammengefasste Batteriezellen mit elektrischen Polen, angeordnet an mindestens einer Stirnseite des Batteriemoduls, und mehrere diese Pole elektrisch verbindende Stromschienen aufweisen, mit einer elektrischen Isolierung und mit einer stirnseitig der Batteriemodule zur Kühlung und/oder Heizung ihrer Batteriezellen angeordneten Wärmeleitplatte.

### Stand der Technik

Die US 2009/297892 A1 beschreibt ein flexibles Batteriemoduldesign. Jedes Batteriemodul weist seine eigene Kühlvorrichtung auf, welche an einer oder beiden Stirnseiten des Moduls angeordnet sein kann. Die Zellen innerhalb des Moduls weisen eine unterschiedliche Ausrichtung auf. An jeder Stirnseite des Moduls sind mehrere Busplättchen angeordnet, welche die Zellen parallel und seriell verbinden. Nachteilig ist zum einen, dass jedes Modul eine eigene Kühlvorrichtung aufweist, was den Aufbau komplex und filigran macht. Nachteilig ist zum anderen, dass die Zellen innerhalb der Module und/oder modul übergreifend mit unterschiedlicher Ausrichtung der Pole angeordnet sind, sodass die Wärmeableitung aus den Zellen nicht gleichmäßig erfolgt, bzw. bei beidseitiger Kühlung gegengleich erfolgt. Nachteilig ist, dass bei seriell verbundenen Zellen innerhalb eines Batteriemoduls innerhalb des Batteriemoduls Batteriezellen vorliegen, deren Polausrichtung gegengleich zu anderen Batteriezellen im Batteriemodul ist. Nachteilig ist, dass bei seriell verbundenen Batteriemodulen, die in einer Ebene angeordneten sind, Batteriezellen vorliegen, deren Polausrichtung gegengleich zu anderen Batteriezellen in den seriell verbundenen Batteriemodulen ist.

Die US 2011/293998 A1 zeigt eine modulare Batterie, bei welcher die Ausrichtung der Batteriezellen in den einzelnen Modulen einheitlich ist. Bei serieller Schaltung der einzelnen Module im Gehäuse werden die Module mit gegengleicher Pol-Ausrichtung ihrer Module angeordnet, was aufgrund der richtungsabhängigen Wärmeableitung in den Batteriezellen nachteilig ist.

Bei der EP 2 475 025 A1 sind die Plus- und Minuspole der Batteriezellen auf ein und derselben Stirnseite angeordnet. Die Kühlung erfolgt nicht an der Stirnseite, an welcher die Pole angeordnet sind.

Zur Kühlung der Batteriezellen einer Batterie ist es bekannt (EP 2 564 448 B1), die Batteriemodule aus zusammengefassten Batteriezellen bodenseitig, also an der unteren Stirnseite an einer Wärmeleitplatte aufzuspannen. Die Wärmeleitplatte weist mit Kühlmittel durchströmte Kühlkanäle auf, wodurch die Batteriezellen aktiv gekühlt werden können. Die Pole der Batteriezellen sind auf der oberen Stirnseite der Batteriemodule angeordnet und entsprechend einer parallelen oder seriellen Verschaltung der Batteriezellen über Stromschienen, die auch oftmals als "busbar" bzw. Zellenverbinder/Zellenverbinderplatine bezeichnet werden, elektrisch miteinander verbunden. Mit solch einer bodenseitigen Kühlung der Batteriezellen können zwar die Batteriezellen temperiert werden - eine derartige Kühlung ist jedoch aufgrund des Isolationsgehäuses der Batteriezellen vergleichsweise träge. Daher werden auch Temperaturspitzen in den Batteriezellen, beispielsweise verursacht durch einen hohen elektrischen Leistungsabruf, vergleichsweise träge kompensiert, was die Leistungsfähigkeit und selbst die Lebensdauer der Batteriezellen bzw. damit der Batterie negativ beeinträchtigen kann.

Zudem ist zur Kopfkühlung von Batterien bekannt (DE 10 2007 063 178 A1), zwischen den Polen der Batteriezellen und den Stromleisten eine Kühlplatte vorzusehen. Durch den thermischen Kontakt zwischen den metallischen Polen und der Kühlplatte kann zwar für eine erhöhte Wärmeableitung gesorgt werden, der Aufbau solch einer Batterie ist jedoch vergleichsweise komplex und durch den mechanischen Verbund auch vergleichsweise aufwändig zu warten.

### Darstellung der Erfindung

Die Erfindung hat sich daher die Aufgabe gestellt, eine Batterie mit mehreren Batteriemodulen der eingangs geschilderten Art, in ihrer Standfestigkeit zu verbessern - und zwar bei konstruktiver Einfachheit. Außerdem soll die Batterie eine hohe Leistungsdichte aufweisen.

Die Erfindung löst die gestellte Aufgabe durch die Batterie mit den Merkmalen im Anspruch 1.

Ist die Wärmeleitplatte an der, Pole der Batteriezellen aufweisenden Stirnseite des Batteriemoduls vorgesehen, wobei sich zwischen der Stromschiene des Batteriemoduls und der Wärmeleitplatte die elektrische Isolierung befindet, die als thermisches Kontaktelement ausgebildet ist, kann zunächst die Temperierung der Batteriezellen verbessert werden, da über die metallischen und damit vergleichsweise gut thermisch leitenden Pole der Batteriezellen ein verbesserter thermischer Übergang von Wärmeleitplatte auf Batteriezellen bzw. umgekehrt ermöglicht werden kann. Auf diese Weise können Temperaturspitzen durch eine vergleichsweise hohe Leistungsabgabe und/oder eine hohe Ladeleistung der Batterie schnell und zuverlässig von den Batteriezellen abgeführt werden, was die Standfestigkeit der Batterie deutlich erhöhen kann.

Im Gegensatz zum Stand der Technik führt jedoch eine derart konstruktiv vorgesehene Wärmeleitplatte nicht zu einer Beeinträchtigung des konstruktiv einfachen, modularen Aufbaus der Batterie. Erfindungsgemäß wird nämlich vorgeschlagen, die Wärmeleitplatte nicht in den Verbund des Batteriemoduls, aufweisend Batteriezellen und Stromschienen, einzubinden, wie dies von Batterien mit Kopfkühlung bekannt ist. Die Wärmeleitplatte ist vielmehr vom Batteriemodul getrennt und nach der elektrischen Isolierung in der Batterie angeordnet. Da diese elektrische Isolierung auch als thermisches Kontaktelement ausgebildet ist, stört diese modulare Konstruktion der Batterie auch nicht weiter die Wärmeleitfähigkeit zwischen Batteriezellen und Wärmeleitplatte.

Des Weiteren eröffnet sich durch die erfindungsgemäße Konstruktion die Möglichkeit, dass mehrere Batteriemodule über eine gemeinsame Wärmeleitplatte aktiv temperiert werden, was nicht nur den konstruktiven Aufwand an der Batterie weiter reduziert, sondern zudem vergleichsweise hohe Leistungsdichten zulassen kann.

Die Konstruktionsverhältnisse können vereinfacht und die Wartungsfreundlichkeit erhöht werden, wenn die elektrische Isolierung als Wärmeleitfolie ausgebildet ist.

Die Temperierung der Pole kann verbessert werden, wenn die Stromschiene ein Metallblech aufweist, das über die Pole der Batteriezellen verläuft.

Ist das Metallblech mit vorspringenden Kontaktbereichen mit den Polen der Batteriezellen elektrisch verbunden, können Materialtoleranzen und thermische Expansion und/oder Kontraktion über Verformungen am vorspringenden Kontaktbereich aufgenommen werden. Die Gefahr eines thermischen Kontaktverlusts der Stromschiene mit der Wärmeleitplatte ist sohin erheblich reduzierbar.

Das Vorsehen einer kompakten Stromschiene zum Zusammenschalten der Batteriezellen kann erleichtert werden, wenn die Batteriezellen an beiden Stirnseiten ihres jeweiligen Batteriemoduls elektrische Pole aufweisen. Zudem kann auf diese Weise eine Stromschiene pro Stirnseite des Batteriemoduls ausreichen.

Weisen die Batteriezellen je ein Sicherheitsventil auf, welche Sicherheitsventile an einer gemeinsamen Stirnseite ihres jeweiligen Batteriemoduls vorgesehen sind, kann eine Gefährdung der Betriebssicherheit der Batteriezelle vermieden werden, wenn die Wärmeleitplatte an der, dieser gemeinsamen Stirnseite gegenüberliegenden Stirnseite vorgehsehen ist. Die Wärmeleitplatte liegt nämlich damit nicht im Strömungsweg der Batteriezellen bei deren Entgasung.

Die Konstruktion der Batterie kann weiter vereinfacht werden, wenn die Batteriezellen als Rundzellen ausgebildet sind.

Die Konstruktion der Batterie kann weiter vereinfacht werden, wenn die Wärmeleitplatte ein tragendes Strukturbauteil der Batterie ausbildet, an dem die Batteriemodule befestigt sind. Zudem kann damit die Verwindungssteifigkeit der Batteriemodule deutlich erhöht werden, was die mechanische Standfestigkeit der Batterie weiter erhöhen kann.

Weisen die Batteriemodule in Längsrichtung der Batteriezellen verlaufende Abstandshalter auf, über welche die Batteriemodule an der Wärmeleitplatte befestigt sind, können die Batteriezellen von Vorspannkräften eventueller Befestigungsmittel entlastet werden. Dies schützt unter anderem die elektrischen Verbindungen zwischen den Polen der Batteriezellen und der Stromschiene. Die Standfestigkeit der Batterie kann sich damit weiter erhöhen.

Die Batteriemodule können vergleichsweise einfach verschaltet werden, wenn die Batteriemodule mit den Stromschienen elektrisch verbundene Kontaktflächen aufweisen, die an gegenüberliegenden Längsseiten des jeweiligen Batteriemoduls und an derselben Stirnseite, angeordnet sind. Damit kann es beispielsweise möglich werden, die Batteriemodule durch anschließendes Aneinanderreihen an den Längsseiten elektrisch über die so gegenüberliegenden Kontaktflächen der beiden Batteriemodule zu verbinden. Dies kann zu einer erhöhten Einfachheit im modularen Aufbau der Batterie führen, was die Montage und Wartung der Batterie erleichtern kann.

Weisen die Batteriemodule auf der, der Wärmeleitplatte gegenüberliegenden Stirnseite einen Zellenhalter für die Batteriezellen auf, kann dies den mechanischen Verbund bei den Batteriemodulen verbessern.

Die Kühl/Heizwirkung der Wärmeleitplatte kann verbessert werden, wenn diese Wärmeleitplatte aktive Kühl- und/oder Heizmittel aufweist. Die Heiz-/Kühlmittel können ein Teil eines hydraulisches Kreislaufs sein. Selbstverständlich aber auch vorstellbar sind beispielsweise elektrische Heizungen, PeltierElemente, Verdampfer eines Kühlmittelkreislaufs, etc.

### Kurze Beschreibung der Zeichnungen

In den Figuren ist beispielsweise der Erfindungsgegenstand anhand einer Ausführungsvariante dargestellt. Es zeigen:
Fig. 1 eine dreidimensionale Ansicht auf eine teilweise dargestellte Batterie,
Fig. 2 eine Schnittansicht und
Fig. 3 eine Detailansicht zur Fig. 2.

### Wege zur Ausführung der Erfindung

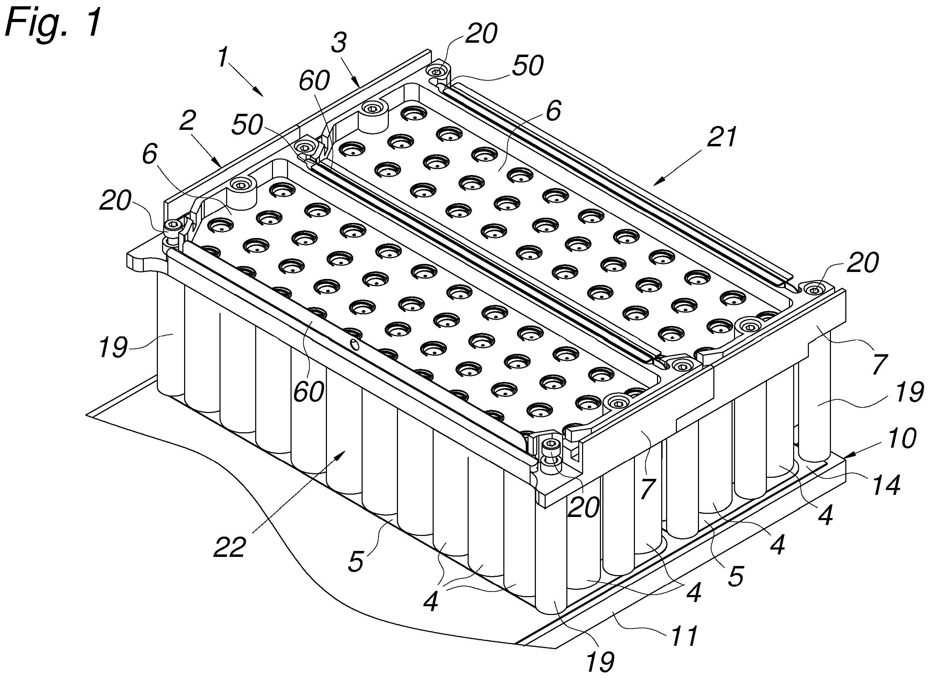

Nach Fig. 1 ist beispielsweise eine Batterie 1 dargestellt, die mehrere Batteriemodule 2, 3 aufweist, welche Batteriemodule 2, 3 elektrisch zusammengeschaltet sind. Die Batteriemodule 2, 3 weisen je einen mechanischen und elektrischen Verbund aus zusammengefassten Batteriezellen 4, metallische Stromschienen 5, 6 sowie einen Zellenhalter 7, bevorzugt aus Kunststoff, auf. Die Batteriezellen 4 ragen in die nicht näher dargestellten Aufnahmen der Zellenhalter 7 ein, womit dieser Zellenhalter 7 die Batteriezellen 4 formschlüssig aufnimmt und diese damit fixiert bzw. lagert - wie anhand der Fig. 1 zu erkennen - damit ist eine hohe mechanische Stabilität der Batteriemodule 2, 3 gewährleistete. Die elektrischen Pole 8, 9, nämlich Pluspol 9 und Minuspol 8, sind an gegenüberliegenden Stirnseiten 30, 31 der Batteriemodule 2, 3 angeordnet und an den dort vorgesehenen Stromschienen 5 bzw. 6 elektrisch angeschlossen, also mit diesen elektrisch verbunden, welche Stromschienen 5 bzw. 6 als Zellenverbinder/Zellenverbinderplatine der Batteriezellen 7 in je einem Batteriemodul 2, 3 dienen.

Zudem weist die Batterie 1 ein tragendes Strukturbauteil 10 auf, das als metallische Wärmeleitplatte 11 ausgebildet ist. Diese Wärmeleitplatte 11 ist stirnseitig der Batteriemodule 2, 3 vorgesehen - in gegenständlichem Beispiel an der unteren Stirnseite 30, also am Boden der Batteriemodule 2, 3. Die Batteriezellen 4 der Batteriemodule 2, 3 sind in thermischer Verbindung mit der Wärmeleitplatte 11, die zum Kühlen und/oder Heizen der Batteriezellen 4 ausgebildet ist. Zu diesem Zweck wird die Wärmeleitplatte 11 über Heiz-/Kühlmittel 12 thermisch belastet.

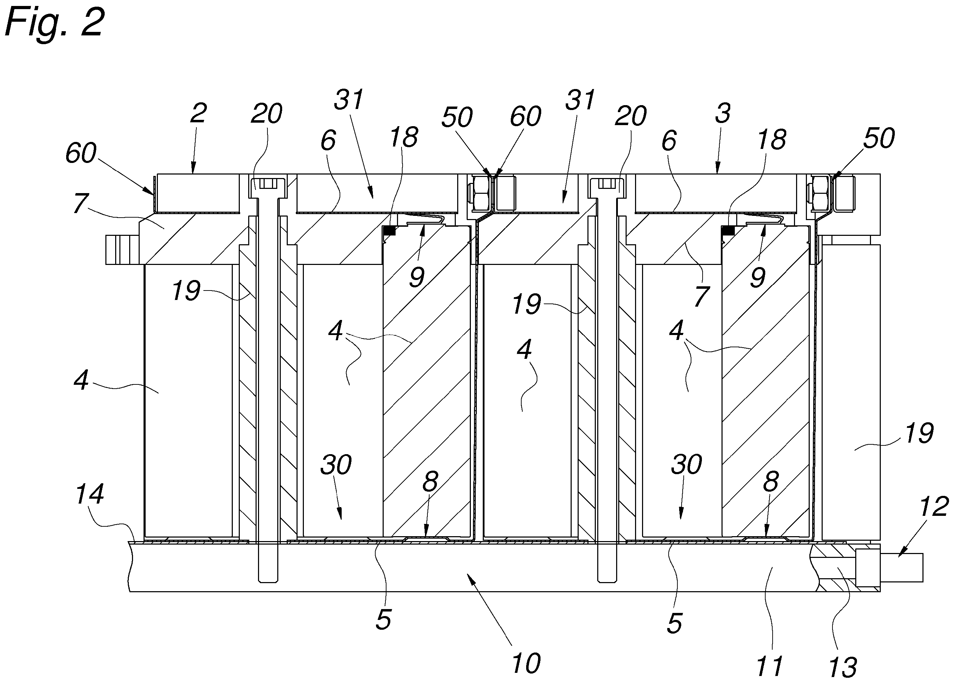

Wie aus der Fig. 2 zu entnehmen, weist die Wärmeleitplatte 11 aktive Heiz/Kühlmittel 12 in Form von Flüssigkeitsleitungen 13 in der Wärmeleitplatte 11 auf, durch welche ein nicht näher dargestellter Wärmeträger geführt wird, um die Batteriezellen 4 temperieren zu können. Passive Heiz-/Kühlmittel, wie beispielsweise nicht näher dargestellte Wärmeleitrippen, sind selbstverständlich ebenso alternativ oder in Kombination mit aktiven Heiz/Kühlmittel 12 vorstellbar.

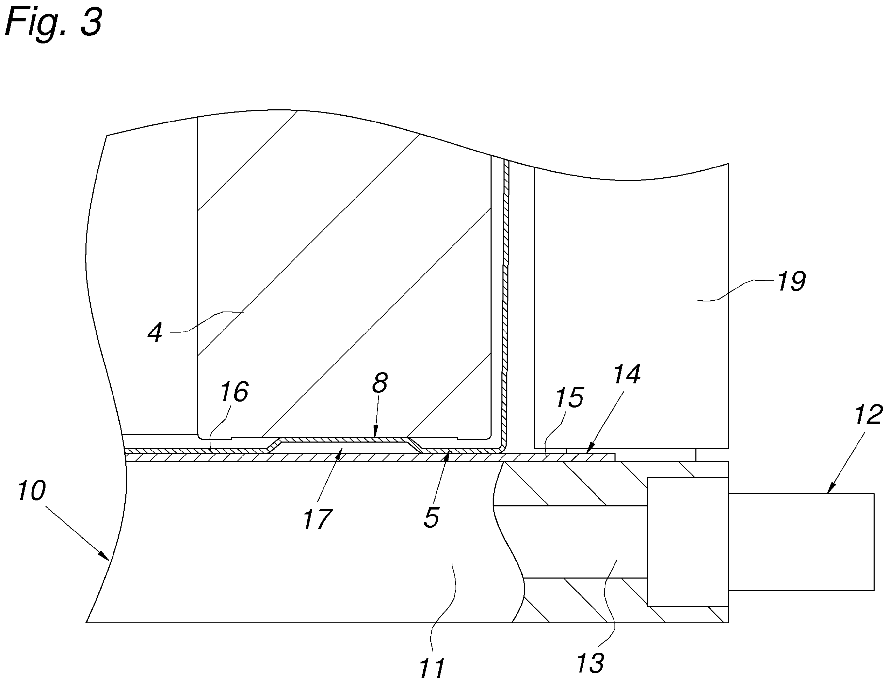

Um die Batteriezellen 4 thermisch vorteilhaft an die Wärmeleitplatte 11 anzukoppeln, ist erfindungsgemäß die Wärmeleitplatte 11 an der, Pole 8 der Batteriezellen 5 aufweisenden unteren Stirnseite 30 der Batteriemodule 2, 3 vorgesehen. Damit kann den Batteriezellen 4 über die metallische Leitfähigkeit der Pole 8 besonders schnell thermische Energie zu- oder abgeführt werden. Die Wärmeleitplatte 11 ist thermisch an die negativen Pole 8 gekoppelt, und zwar über eine elektrische Isolierung 14 und die Stromschiene 5, welche an die jeweiligen Pol 8 der Batteriezellen 4 anschließt - wie im Detail in Fig. 3 zu erkennen. Hierzu ist die elektrische Isolierung 14 zur Reduktion des thermischen Widerstands als thermisches Kontaktelement ausgebildet.

Des Weiteren kann mit Hilfe der elektrischen Isolierung 14 ein elektrischer Kurzschluss zwischen den Batteriezellen 4 bzw. den Batteriemodulen 2, 3 vermieden werden. Der modulartige Aufbau der Batterie 1 kann daher weiter gewährleistet bleiben, auch wenn die Batteriemodule 2, 3 gemeinsam von einer elektrisch leitenden Wärmeleitplatte 11 gekühlt werden. Eine standfeste sowie konstruktiv einfach aufgebaute, modulare Batterie 1 ist damit geschaffen.

Wie in der Fig. 1 zu erkennen, ist die elektrische Isolierung 14 relativ dünn ausgeführt, was durch Verwendung einer Wärmeleitfolie 15 ermöglicht wird. Im Allgemeinen wird erwähnt, dass als thermisches Kontaktelement jegliches Wärmeleitpad vorstellbar ist, beispielsweise Silikongummi-Folien, Silikonmatten, Glimmerscheiben, Keramikscheiben etc.

Als metallische Stromschiene 5, 6 hat sich ein umgeformtes, vorzugsweise gebogenes, elektrisch leitendes Metallblech 16, beispielsweise ein Nickelblech, bewährt - unter anderem, um die mechanische Belastbarkeit des Batteriemoduls 2, 3 zu erhöhen. Das Metallblech 16 verläuft auch über die Pole 8, 9 der Batteriezellen 4, was zum einen die Wärmekapazität der Stromschienen 5, 6 erhöht, zudem aber auch zu einer vergrößerten Kontaktfläche mit der Wärmeleitplatte 11 führt.

Entsprechend Fig. 3 ist am Metallblech 16 ein vorspringender Kontaktbereich 17 zu erkennen, der mit dem Minuspol 8 der Batteriezelle 4 elektrisch verbunden ist. Dieser vorspringende Kontaktbereich 17 kann federelastisch Erschütterungen, thermische Expansion oder Kontraktionen am Batteriemodul 2, 3 aufnehmen etc. - und damit zur Erhöhung der Standfestigkeit der Batterie 1 beitragen.

In Fig. 2 ist bei den Batteriezellen 4 je ein Sicherheitsventil 18 zu erkennen - nämlich an deren Zellenkopf. Alle Sicherheitsventile 18 sind an der oberen gemeinsamen Stirnseite 31 der Batteriemodule 2, 3 vorgesehen. Die Sicherheitsventile 18 lassen bekanntermaßen einen in der Batteriezelle entstehenden Überdruck, beispielsweise im Versagensfall, ab. Die Wärmeleitplatte 11 ist an jener Stirnseite 30 des jeweiligen Batteriemoduls 2, 3 vorgesehen, die der oberen gemeinsamen Stirnseite 31, also jener, welche bei den Sicherheitsventilen 18 angeordnet ist, gegenüberliegt. Damit wird sichergestellt, dass ein aus der Batteriezelle 4 über das Sicherheitsventil 18 ausströmendes Gas von der Wärmeleitplatte 11 ungehindert entweichen kann. Trotz einer stirnseitig angeordneten Wärmeleitplatte 11 muss daher nicht mit einer reduzierten Sicherheit an der Batterie 1 gerechnet werden.

Erkennbar ist zudem, dass die Batteriezellen 4 als Rundzellen ausgebildet sind, wodurch hohe Kompaktheit und in weiterer Folge eine hohe Energiedicht an der Batterie 1 erreicht wird.

Die Batteriemodule 2, 3 weisen - im dargestellten Beispiel randseitig - mehrere in Längsrichtung der Batteriezellen 4 verlaufende Abstandshalter 19 mit Schraubverbindungen 20 auf. Über diese Abstandshalter 19 sind die Batteriemodule 2, 3 also an der Wärmeleitplatte 11 befestigt. Die Wärmeleitplatte 11 dient daher nicht nur zur Kühlung und/oder Erwärmung der Batteriezellen 4, sondern stellt auch einen Träger für die Batteriemodule 2, 3 dar.

Die Batteriemodule 2, 3 weisen mit den jeweiligen Stromschienen 5, 6 elektrisch verbundene Kontaktflächen 50, 60 auf - wie in der Fig. 2 erkennbar. Die Kontaktflächen 50, 60 sind an den beiden gegenüberliegenden Längsseiten 21, 22 des jeweiligen Batteriemoduls 2, 3 und an derselben - nämlich an der oberen - Stirnseite 31 angeordnet. Damit sind die Batteriemodule 2, 3 vergleichsweise einfach elektrisch in Reihe zu schalten.

## Patentansprüche

1. Batterie mit mehreren, elektrisch zusammengefassten Batteriemodulen (2, 3),
die jeweils mehrere zusammengefasste Batteriezellen (4) aufweisen, **dadurch gekennzeichnet, dass** an einer ersten gemeinsamen Stirnseite (30) der Batteriemodule (2, 3) die elektrischen Minuspole (8) der Batteriezellen (4) angeordnet sind und an einer der ersten gemeinsamen Stirnseite (30) gegenüberliegenden zweiten gemeinsamen Stirnseite (31) der Batteriemodule (2, 3) die elektrischen Pluspole (8) der Batteriezellen (4) angeordnet sind und wobei jedes Batteriemodul (2, 3) eine diese elektrischen Minuspole (8) elektrisch verbindende Stromschiene (5) und eine diese elektrischen Pluspole (9) elektrisch verbindende Stromschiene (6) aufweist,
wobei die Batterie an einer der beiden gemeinsamen Stirnseiten (30, 31) eine zur Kühlung und/oder Heizung ihrer Batteriezellen (4) angeordneten Wärmeleitplatte (11) aufweist, wobei sich zwischen den Stromschienen (5) oder den Stromschienen (6) der Batteriemodule (2, 3) und der Wärmeleitplatte (11) eine elektrische Isolierung (14) befindet, die als thermisches Kontaktelement ausgebildet ist,
wobei die mehreren Batteriemodule (2, 3) eine gemeinsame Wärmeleitplatte (11) aufweisen, wobei die mehreren Batteriemodule (2, 3), welche eine gemeinsame Wärmeleitplatte (11) an ihrer gemeinsamen Stirnseite (30, 31) aufweisen, jeweils mit den Stromschienen (5, 6) elektrisch verbundene Kontaktflächen (50, 60) aufweisen, die an gegenüberliegenden Längsseiten des jeweiligen Batteriemoduls (2, 3) und an derselben gemeinsamen Stirnseite (30, 31) der Batteriemodule (2, 3), angeordnet sind, wobei die Batteriemodule (2, 3) durch Aneinanderreihen an den Längsseiten elektrisch über die so gegenüberliegenden Kontaktflächen (50, 60) der angrenzender Batteriemodule (2, 3) verbunden und in Reihe geschaltet sind.

2. Batterie nach Anspruch 1, **dadurch gekennzeichnet, dass**
die Wärmeleitplatte (11) an der gemeinsamen Stirnseite (30) der Batteriemodule (2, 3) angeordnet ist, an welcher gemeinsamen Stirnseite die Minuspole (8) der Batteriezellen (4) der Batteriemodule (2, 3) angeordnet sind.

3. Batterie nach einem der Ansprüche 1 bis 2, **dadurch gekennzeichnet, dass**
die Wärmeleitplatte (11) als ein passives Heiz/Kühlmittel und/oder als ein aktives Heiz/Kühlmittel ausgebildet ist.

4. Batterie nach einem der Ansprüche 1 bis 3, **dadurch gekennzeichnet, dass** die elektrische Isolierung (14) als Wärmeleitfolie (15) ausgebildet ist.

5. Batterie nach einem der Ansprüche 1 bis 4, **dadurch gekennzeichnet, dass** die Stromschiene (5, 6) ein Metallblech (16) aufweist, das über die Pole (8, 9) der Batteriezellen (4) verläuft.

6. Batterie nach Anspruch 5, **dadurch gekennzeichnet, dass** das Metallblech (16) mit vorspringenden Kontaktbereichen mit den Polen (8) der Batteriezellen (4) elektrisch verbunden ist.

7. Batterie nach einem der Ansprüche 1 bis 6, **dadurch gekennzeichnet, dass** die Batteriezellen (4) je ein Sicherheitsventil (18) aufweisen, welche Sicherheitsventile (18) an einer gemeinsamen Stirnseite (31) ihres jeweiligen Batteriemoduls (2, 3) vorgesehen sind, wobei die Wärmeleitplatte (11) an der, dieser gemeinsamen Stirnseite (31) gegenüberliegenden Stirnseite (30) vorgesehen ist.

8. Batterie nach einem der Ansprüche 1 bis 7, **dadurch gekennzeichnet, dass** die Batteriezellen (4) als Rundzellen ausgebildet sind.

9. Batterie nach einem der Ansprüche 1 bis 8, **dadurch gekennzeichnet, dass** Wärmeleitplatte (11) ein tragendes Strukturbauteil (10) der Batterie ausbildet, an dem die Batteriemodule (2, 3) befestigt sind.

10. Batterie nach einem der Ansprüche 1 bis 9, **dadurch gekennzeichnet, dass** die Batteriemodule (2, 3) in Längsrichtung der Batteriezellen (4) verlaufende Abstandshalter (19) aufweisen, über welche die Batteriemodule (2, 3) an der Wärmeleitplatte (11) befestigt sind.

11. Batterie nach einem der Ansprüche 1 bis 10, **dadurch gekennzeichnet, dass** die Batteriemodule (2, 3) mit den Stromschienen (5, 6) elektrisch verbundene Kontaktflächen (50, 60) aufweisen, die an gegenüberliegenden Längsseiten (21, 22) des jeweiligen Batteriemoduls (2, 3) und an derselben Stirnseite (31), angeordnet sind.

12. Batterie nach einem der Ansprüche 1 bis 11, **dadurch gekennzeichnet, dass** die Batteriemodule (2, 3) auf der, der Wärmeleitplatte (11) gegenüberliegenden Stirnseite (31) einen Zellenhalter (7) für die Batteriezellen (4) aufweist.

13. Batterie nach einem der Ansprüche 1 bis 12, **dadurch gekennzeichnet, dass** die Wärmeleitplatte (11) aktive Kühl- und/oder Heizmittel (12) aufweist.

14. Batterie, umfassend mehrere Batteriemodule (2, 3) und eine Wärmeleitplatte (11), **dadurch gekennzeichnet, dass** mehrere in Reihe geschaltete Batteriemodule (2, 3), eine gemeinsame Wärmeleitplatte (11) an einer ihrer gemeinsamen Stirnseiten (30, 31) aufweisen, wobei alle Batteriezellen (4) der Batteriemodule (2, 3) mit nur einer Art von Polen (8, 9) der gemeinsamen Wärmeleitplatte (11) der Batteriemodule (2, 3) zugewandt liegen.

## Claims

1. A battery having a plurality of electrically coupled battery modules (2, 3) which each have a plurality of coupled battery cells (4), **characterized in that** the electrical negative poles (8) of the battery cells (4) are arranged on a first common end face (30) of the battery modules (2, 3) and the electrical positive poles (8) of the battery cells (4) are arranged on a second common end face (31) of the battery modules (2, 3) opposite the first common end face (30), and wherein each battery module (2, 3) has a busbar (5) electrically connecting these electrical negative poles (8) and a busbar (6) electrically connecting these electrical positive poles (9),
wherein the battery, on one of the two common end faces (30, 31), has a heat conducting plate (11) arranged for cooling and/or heating its battery cells (4), wherein an electrical insulation (14), which is configured as a thermal contact element, is located between the busbars (5) or the busbars (6) of the battery modules (2, 3) and the heat conducting plate (11),
wherein the plurality of battery modules (2, 3) have a common heat conducting plate (11), wherein the plurality of battery modules (2, 3), which have a common heat conducting plate (11) on their common end face (30, 31), each have contact surfaces (50, 60) electrically connected to the busbars (5, 6), which contact surfaces (50, 60) are arranged on opposite longitudinal sides of the respective battery module (2, 3) and on the same common end face (30, 31) of the battery modules (2, 3), wherein the battery modules (2, 3) by being lined up on the longitudinal sides are electrically connected and serially connected via the thus opposite contact surfaces (50, 60) of the adjacent battery modules (2, 3).

2. The battery according to claim 1, **characterized in that** the heat conducting plate (11) is arranged on the common end face (30) of the battery modules (2, 3), on which common end face the negative poles (8) of the battery cells (4) of the battery modules (2, 3) are arranged.

3. The battery according to one of claims 1 to 2, **characterized in that** the heat conducting plate (11) is configured as a passive heating/cooling medium and/or as an active heating/cooling medium.

4. The battery according to one of claims 1 to 3, **characterized in that** the electrical insulation (14) is configured as a heat conducting foil (15).

5. The battery according to one of claims 1 to 4, **characterized in that** the busbar (5, 6) has a metal sheet (16) which runs over the poles (8, 9) of the battery cells (4).

6. The battery according to claim 5, **characterized in that** the metal sheet (16) is electrically connected to the poles (8) of the battery cells (4) by means of protruding contact regions.

7. The battery according to one of claims 1 to 6, **characterized in that** the battery cells (4) each have a safety valve (18), which safety valves (18) are provided on a common end face (31) of their respective battery module (2, 3), wherein the heat conducting plate (11) is provided on the end face (30) opposite this common end face (31).

8. The battery according to one of claims 1 to 7, **characterized in that** the battery cells (4) are configured as round cells.

9. The battery according to one of claims 1 to 8, **characterized in that** heat conducting plate (11) forms a load-bearing structural component (10) of the battery, to which load-bearing structural component (10) the battery modules (2, 3) are attached.

10. The battery according to one of claims 1 to 9, **characterized in that** the battery modules (2, 3) have spacers (19) running in the longitudinal direction of the battery cells (4), via which the battery modules (2, 3) are fastened to the heat conducting plate (11).

11. The battery according to one of claims 1 to 10, **characterized in that** the battery modules (2, 3) have contact surfaces (50, 60) which are electrically connected to the busbars (5, 6) and are arranged on opposite longitudinal sides (21, 22) of the respective battery module (2, 3) and at the same end face (31).

12. The battery according to one of claims 1 to 11, **characterized in that** the battery modules (2, 3) have a cell holder (7) for the battery cells (4) on the end face (31) opposite the heat conducting plate (11).

13. The battery according to one of claims 1 to 12, **characterized in that** the heat conducting plate (11) has active cooling and/or heating means (12).

14. A battery comprising a plurality of battery modules (2, 3) and a heat conducting plate (11), **characterized in that** a plurality of serially connected battery modules (2, 3) have a common heat conducting plate (11) on one of their common end faces (30, 31), wherein all the battery cells (4) of the battery modules (2, 3) lie with only one type of poles (8, 9) facing the common heat conducting plate (11) of the battery modules (2, 3).

## Revendications

1. Batterie avec plusieurs modules de batterie (2, 3) interconnectées électriquement, qui présentent chacun plusieurs cellules de batterie (4) interconnectées, **caractérisée en ce que** les bornes électriques négatives (8) des cellules de batterie (4) sont agencées sur une première face d'extrémité commune (30) des modules de batterie (2, 3) et les bornes électriques positives (8) des cellules de batterie (4) sont agencées sur une seconde face d'extrémité commune (31) des modules de batterie (2, 3) opposée à la première face d'extrémité commune (30), et dans laquelle chaque module de batterie (2, 3) possède une barre omnibus (5) connectant électriquement ces bornes électriques négatives (8) et une barre omnibus (6) reliant électriquement ces bornes électriques positives (9), dans laquelle la batterie présente une plaque conductrice de chaleur (11) agencée sur une certaine des deux faces frontales communes (30, 31) pour le refroidissement et/ou le chauffage de ses cellules de batterie (4), dans laquelle entre les barres omnibus (5) ou les barres omnibus (6) des modules de batterie (2, 3) et la plaque conductrice de chaleur (11) se trouve une isolation électrique (14) qui est conçue comme un élément de contact thermique,
dans laquelle les plusieurs modules de batterie (2, 3) présentent une plaque conductrice de chaleur commune (11), dans laquelle les plusieurs modules de batterie (2, 3), qui présentent une plaque conductrice de chaleur commune (11) sur leur face frontale commune (30, 31), présentent respectivement des surfaces de contact (50, 60) connectées électriquement aux barres omnibus (5, 6), qui sont agencées sur des côtés longitudinaux opposés du module de batterie respectif (2, 3) et sur la même face frontale commune (30, 31) des modules de batterie (2, 3), dans laquelle les modules de batterie (2, 3) sont connectés électriquement alignés sur les côtés longitudinaux via les surfaces de contact (50, 60) ainsi opposées des modules de batterie (2, 3) adjacents et sont connectés en série.

2. Batterie selon la revendication 1, **caractérisée en ce que** la plaque conductrice de chaleur (11) est agencée sur la face frontale commune (30) des modules de batterie (2, 3), face frontale commune au niveau de laquelle sont agencées les bornes négatives (8) des cellules de batterie (4) des modules de batterie (2, 3).

3. Batterie selon l'une quelconque des revendications 1 à 2, **caractérisée en ce que** la plaque conductrice de chaleur (11) est conçue comme des moyens de chauffage/refroidissement passif et/ou comme des moyens de chauffage/refroidissement actif.

4. Batterie selon l'une quelconque des revendications 1 à 3, **caractérisée en ce que** l'isolation électrique (14) est réalisée sous la forme d'une feuille conductrice de chaleur (15).

5. Batterie selon l'une quelconque des revendications 1 à 4, **caractérisée en ce que** la barre omnibus (5, 6) présente une tôle métallique (16) qui s'étend sur les bornes (8, 9) des cellules de batterie (4).

6. Batterie selon la revendication 5, **caractérisée en ce que** la tôle métallique (16) est connectée électriquement avec des zones de contact faisant saillie aux bornes (8) des cellules de batterie (4).

7. Batterie selon l'une quelconque des revendications 1 à 6, **caractérisée en ce que** les cellules de batterie (4) présentent chacune une soupape de sécurité (18), lesquelles soupapes de sécurité (18) sont prévues sur une face frontale commune (31) de leur module de batterie respectif (2, 3), la plaque conductrice de chaleur (11) étant prévue sur la face frontale (30) opposée à cette face frontale commune (31).

8. Batterie selon l'une quelconque des revendications 1 à 7, **caractérisée en ce que** les cellules de batterie (4) sont conçues sous la forme de cellules rondes.

9. Batterie selon l'une quelconque des revendications 1 à 8, **caractérisée en ce que** la plaque conductrice de chaleur (11) forme un composant structurel porteur (10) de la batterie, sur lequel les modules de batterie (2, 3) sont fixés.

10. Batterie selon l'une quelconque des revendications 1 à 9, **caractérisée en ce que** les modules de batterie (2, 3) présentent des entretoises (19) s'étendant dans la direction longitudinale des cellules de batterie (4), par l'intermédiaire desquelles les modules de batterie (2, 3) sont fixés à la plaque conductrice de chaleur (11).

11. Batterie selon l'une quelconque des revendications 1 à 10, **caractérisée en ce que** les modules de batterie (2, 3) présentent des surfaces de contact (50, 60) connectées électriquement aux barres omnibus (5, 6), qui sont agencées sur des faces longitudinales opposées (21, 22) du module de batterie respectif (2, 3) et sur la même face frontale (31).

12. Batterie selon l'une quelconque des revendications 1 à 11, **caractérisée en ce que** les modules de batterie (2, 3) présentent un support de cellules (7) pour les cellules de batterie (4) sur la face frontale (31) opposée à la plaque conductrice de chaleur (11).

13. Batterie selon l'une quelconque des revendications 1 à 12, **caractérisée en ce que** la plaque conductrice de chaleur (11) présente des moyens de refroidissement et/ou de chauffage actifs (12).

14. Batterie, comprenant plusieurs modules de batterie (2, 3) et une plaque conductrice de chaleur (11), **caractérisée en ce que** plusieurs modules de batterie (2, 3) connectés en série présentent une plaque conductrice de chaleur commune (11) sur l'une de leurs faces frontales communes (30, 31), dans laquelle toutes les cellules de batterie (4) des modules de batterie (2, 3) avec un seul type de bornes (8, 9) sont tournées vers la plaque conductrice de chaleur commune (11) des modules de batterie (2, 3).
